# EUROPEAN PATENT APPLICATION

(11) **EP 1 669 965 A1**
(43) Date of publication of application: **14.06.2006**
(21) Application number: 04788182.6
(22) Date of filing: 27.09.2004
(51) Int. Cl.: G09F 9/46, G02F 1/1333, G02F 1/1347, G02F 1/167, G09G 3/20, G09G 3/34, G09G 3/36

(54) **IMAGE DISPLAY DEVICE**

(30) Priority: 30.09.2003 JP 2003341077
(71) Applicant: SEIKO EPSON CORPORATION, Shinjuku-ku, Tokyo 163-0811 (JP)
(72) Inventor: SAWADA, Munenori, Seiko Epson Corporation, Suwa-shi, Nagano 3928502 (JP); HIRAMATSU, Kazunori, Seiko Epson Corporation, Suwa-shi, Nagano 3928502 (JP); NISHIZAWA, Masato, Seiko Epson Corporation, Suwa-shi, Nagano 3928502 (JP)
(74) Representative: Sturt, Clifford Mark
(86) International application number: PCT/JP2004/014086
(87) International publication number: WO 2005/034068

(57) **Abstract**

An image display device according to the present invention includes an electrophoretic display member 2 that can display a predetermined image, a liquid crystal display member 3 placed in front of the electrophoretic display member 2 and which can display the predetermined image at a higher speed than the electrophoretic display member 2, and a control device that causes the electrophoretic displaymember 2 and the liquid crystal display member 3 to display the image corresponding to the same image data at the same position as viewed from front of the device. The control device makes the liquid crystal display member 3 transparent after the predetermined image has been displayed in the electrophoretic display member 2.

## Description

### Technical Field

The present invention relates to an image forming device comprising a display section that can display a predetermined image.

### Background Art

As a technique of this kind, an image display device has hitherto been known which comprises an electrophoretic display member having a plurality of microcapsules each containing an electrophoretic fluid dispersion 4 consisting of black charged grains and a white dispersing medium and paired electrodes (for example, a transparent electrode and a nontransparent electrode) arranged so as to sandwich between the electrodes a layer in which the plurality of microcapsules are disposed as described in, for example, Japanese Patent Laid-Open No. 2000-35598.

In such an image display device, in general, the potential of the transparent electrode is set at a high level, while the potential of the nontransparent electrode is set at a low level. The transparent electrode thus adsorbs the charged grains from the microcapsules sandwiched between the electrodes. The charged grains are visible through the transparent electrode of the electrophoretic display member so as to display a predetermined image on the transparent electrode of the electrophoretic display member.
However, with this conventional technique, since the charged grains are adsorbed to the transparent electrode to display the image, for example, the adsorption of the charged grains requires a long time, resulting in a relatively low display speed. As a result, a viewer feels that he or she must wait for a long time after an operation of displaying and image has been started and before the entire image is actually displayed.

It is thus an object of the present invention to solve the unsolved problem of the above conventional technique to provide an image display device that can prevent the viewer from feeling, when an image is displayed on a display member having a relatively low display speed, that the viewer must wait for a long time before the entire image is actually displayed.

### DISCLOSURE OF THE INVENTION

To accomplish this object, an image display device according to the present invention is characterized by comprising a first display section that can display a predetermined image, a second display section placed in front of the first display section and which can display the predetermined image at a higher speed than the first display section, and a display instructing section that causes the first display section and the second display section to display the predetermined image at the same position as viewed from front of the device, and in that the display instructing section makes the second display section transparent after the predetermined image has been displayed in the first display section. For example, images such as photographs or characters are displayed in the first and second display sections. Further, the second display section has only to be made transparent after the predetermined image has been displayed in the first display section. For example, this may be carried out after the entire predetermined image has been displayed in the first display section or immediately before the entire predetermined image is displayed.

Further, an image display device according to the present invention is characterized by comprising a first display section that can display a predetermined image, a second display section placed behind the first display section and which can display the predetermined image at a higher speed than the first display section, and a display instructing section that causes the first display section and the second display section to display the predetermined image at the same position as viewed from front of the device, and in that the first display section is configured so that the display of the second display section is visible through the first display section from front of the device, and the display instructing section brings the second display section into a non-displayed state after the predetermined image has been displayed in the first display section.

Moreover, the image display device may be characterized by comprising a touch panel placed in the front of a display screen including the first display section and the second display section to allow a user to select an image displayed in at least one of the first and second display sections or to allow the user to input information.
Furthermore, the image display device may be characterized in that the number of pixels per unit area of the second display section is smaller than the number of pixels per unit area of the first display section.

With these arrangements, for example, when a predetermined image is displayed in the first display section, which has a relatively low display speed, the entire predetermined image is displayed in the second display section before it is displayed in the first display section. Thus, the user can view the entire predetermined image displayed from front of the device. This makes it possible to reduce the time before the entire predetermined image is viewed, compared to the method of displaying the predetermined image using only the first display section. As a result, it is possible to prevent the user from feeling that he or she must wait for a long time before the entire predetermined image is displayed.

The image display device may also be characterized by further comprising detailed display unnecessary state detecting section for detecting that a detailed image display is not required and in that when detailed display unnecessary state detecting section detects that no detailed image display is required, the predetermined image is displayed only in the second display section.
With this configuration, when no detailed image display is required, the display of the predetermined image by the first display section is limited. The predetermined image is displayed only in the second display section. It is thus possible to reduce the power consumption of the image display device without impairing display quality.

Moreover, the image display device may be characterized in that the first display section is a storing display member that can hold display contents while a power supply remains interrupted and the second display section is a non-storing display member from which the display contents are deleted when the power supply is interrupted.
With this configuration, when the power supply to the first and second display sections is interrupted after the entire predetermined image has been displayed in the first display section, the display contents of the second display section are deleted, while the display contents of the first display section are retained. The retained display contents are visible to the user from front of the device. Thus, even when for example, a predetermined image remains displayed for a long time, the power consumption of the first and second display sections can be reduced.

Further, the image display device may be characterized in that the first display section is separable from the second display section and from the touch panel.
With this configuration, if for example, the second display section and the touch panel are arranged in front of the first display section so that the'first display section is visible through the second display section and the touch panel, the first display section is allowed to retain the display contents and is then separated, so that the separated first display section is directly visible to the user. It is thus possible to prevent the visibility of the first display section from being degraded when the user views the first display section through the second display section and the touch panel.

The image display device may also be characterized by further comprising high-speed switching display request detecting section for detecting a request for high-speed switching display of a plurality of images and in that when the high-speed switching display request detecting section detects a request for high-speed switching display of a plurality of images, the plurality of images are sequentially displayed only in the second display section.
With this configuration, when the user requests a high-speed switching display, the display of images by the first display section is limited. Consequently, compared to, for example, a method with which after the entire image has been displayed in the first display section, the display of the next image is started, the plurality of images can be sequentially displayed at high speed.

### BRIEF DESCRIPTION OF THE DRAWINGS

FIG. 1 is a diagram showing the configuration of an embodiment of an image display device according to the present invention;
FIG. 2 is an enlarged sectional view of an essential part of a display screen;
FIGS. 3A to 3D are diagrams illustrating a display state of the display screen and the like;
FIG. 4 is a block diagram showing the internal configuration of the image display device;
FIG. 5 is a flow chart showing a contents display process;
FIG. 6 is a flow chart showing a contents high-speed switching display process;
FIGS. 7A to 7C are diagrams illustrating an operation of the embodiment;
FIGS. 8A to 8C are diagrams illustrating an operation of the embodiment;
FIGS. 9A to 9C are diagrams illustrating an operation of the embodiment;
FIG. 10 is a side view illustrating a variation of the present invention; and
FIG. 11 is a block diagram illustrating a variation of the present invention.

### BEST MODE FOR CARRYING OUT THE INVENTION

With reference to the drawings, description will be given of an example of an electronic book reader configured to browse the contents of electronic books as an embodiment of an image display device according to the present invention.

### <Configuration of Electronic Book Reader>

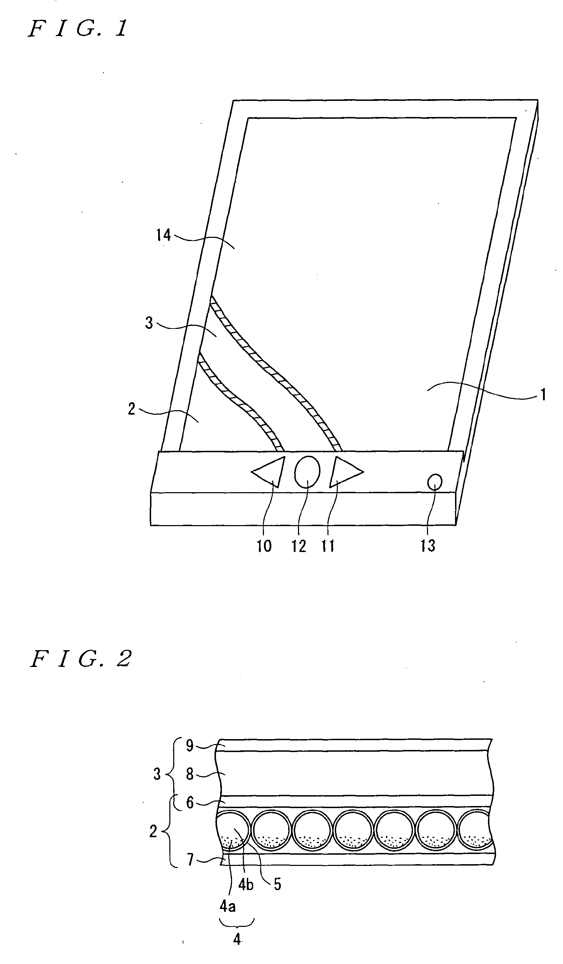

FIG. 1 is a schematic diagram showing the configuration of an electronic book reader that is an embodiment of the present invention. The electronic book reader has a display screen 1 in the center of the device which displays the contents of an electronic book divided into predetermined pages as shown in FIG. 1 . Further, the display screen 1 has an electrophoretic displaymember 2 in the rear and a liquid crystal displaymember 3 in the front as shown in FIG. 2.

Further, the electrophoretic display member 2 includes a plurality of microcapsules 5 each containing an electrophoreticfluid dispersion4consisting ofblack charged grains 4a and a white dispersing medium 4b, and paired electrodes (a transparent electrode and a nontransparent electrode) 6 and 7 arranged so as to sandwich between them a layer in which the plurality of microcapsules 5 are arranged. In this case, the transparent electrode 6 is placed in the front of the device to form a common electrode for the entire surface of the display member. The nontransparent electrode 7 is placed in the rear of the device to form a pixel electrode.

A first display driver 110 (described later) applies a predetermined voltage to arbitrary ones of the microcapsules 5 to cause the black charged grains 4a in these microcapsules to adsorb to the front of the microcapsules (to the side closer to the electrode 6). Then, as shown in FIG. 3A, the charged grains 4a can be perceived from front of the electrophoretic display member 2. The electrophoretic display member 2 thus displays an image corresponding to predetermined image data on a photograph or character which is contained in display contents. Further, when the electrophoretic display member 2 is turned off (a driving circuit is opened) while the image is being displayed, the transparent electrode 6 retains the charges. The Coulomb force of the charges keeps the charged grains 4a adsorbed to the electrode 6. In other words, in the electrophoretic display member 2, while no power is being supplied, the charged grains 4a remain adsorbed, with the displayed image retained.

Further, the liquid crystal display member 3 includes a liquid crystal layer 8 which is brought into a blocked state to display a black color when a predetermined voltage is applied to the liquid crystal layer 8 and which is brought into a transmitted state to become transparent when the predetermined voltage is not applied to the liquid crystal layer 8, and paired transparent electrodes 6 and 9 arranged so as to sandwich the liquid crystal layer 8 between them. In this case, the transparent electrode 6 also acts as a front electrode of the electrophoretic display member2. The transparent electrode 6 is placed in the rear of the device to form a common electrode for the entire surface of the liquid crystal display member 3. Further, the transparent electrode 9 is placed in the front of the device to form a pixel electrode. Moreover, in the transparent electrode (pixel electrode) 9, one pixel is larger than a pixel electrode in the electrophoretic display member 2. The transparent electrode 9 has a lower pixel density than the electrophoretic display member 2 (a smaller number of pixels per unit area) . The transparent electrode 9 has a higher display speed than the electrophoretic display member 2.

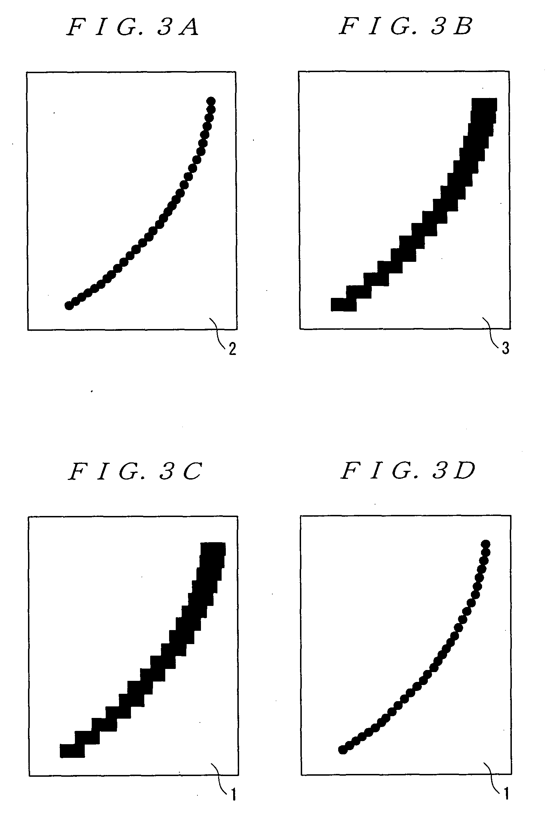

A second display driver 112 (described later) applies a predetermined potential to the liquid crystal layer 8 to display a black color in the liquid crystal layer 8. Then, the black color can be perceived from front of the electrophoretic display member 2. As shown in FIG. 3B, the electrophoretic display member 2 thus displays an image corresponding to predetermined image data. Further, when the liquid crystal displaymember 3 is turned off (a driving circuit is opened) while the image is being displayed, the voltage applied to the liquid display member 3 is zeroed to delete the displayed image.

Then, the electrophoretic display member 2 and the liquid crystal display element 3 display the same image at the same position as viewed from front of the device (the image corresponding to the same image data is displayed at the corresponding positions in the electrophoretic display member 2 and liquid crystal display member 3) as shown in FIGS. 3A and 3B. The image displayed in the liquid crystal display member 3 blocks the image displayed in the electrophoretic display member 2. Then, as shown in FIG. 3C, only the image displayed in the liquid crystal display member 3 is displayed in the display screen 1. On the other hand, when the liquid crystal display member 3 deletes the displayed image while the image is being displayed, the image displayed in the electrophoretic display member 2 is displayed in the display screen 1 as shown in FIG. 3D.

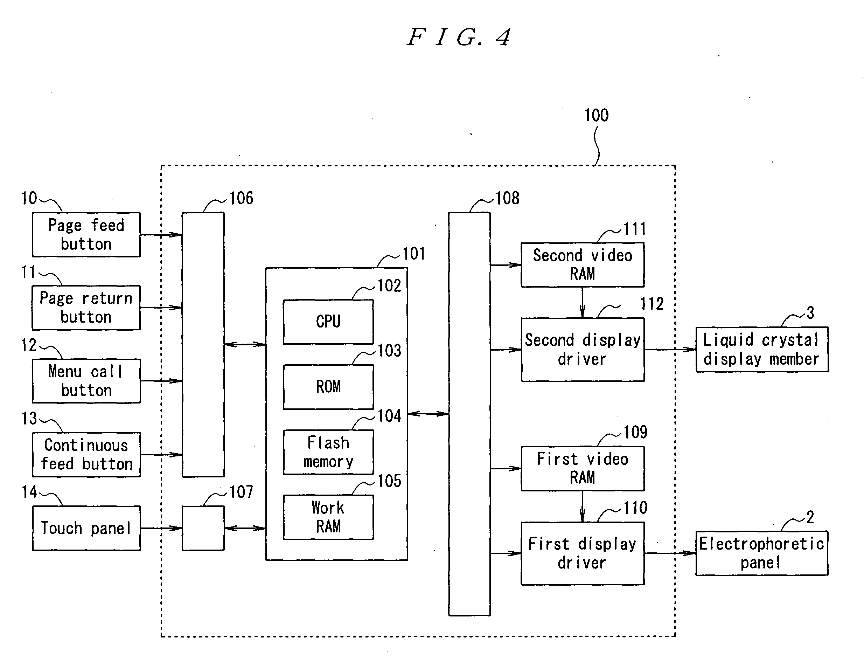

Further, as shown in FIG. 1, the following are arranged in the center of an area below the display screen 1: a page feed button 10 used to allow the display screen 1 to display the contents of the next page, a page return button 11 used to allow the display screen 1 to display the contents of the preceding page, and a menu call button 12 used to allow the display screen 1 to display an image of a predetermined menu screen. The page feed button 10, the page return button 11, and the menu call button 12 are connected to an input I/F (InterFace) 106 (see FIG. 4) of a control device 100, described later.

Moreover, a continuous feed button 13 is placed in the right of the area below the display screen 1 to carry out switching display of the contents of the next page in the display screen 1 at high speed. The continuous feed button 13 is connected to the input I/F 106 (see FIG. 4) of the control device 100, described later.
Further, a touch panel 14 is placed on a front surface of the display screen 1 so that is predetermined menu items are displayed in the display screen 1, an arbitrary one of the displayed menu items is selected. The touch panel 14 is connected to the touch panel I/F 107 (see FIG. 4) of the control device 100 described later.

### <Internal Configuration of Control Device>

Now, the internal configuration of the control device 100 will be described with reference to the block diagram in FIG. 4.

As shown in FIG. 4, the control device 100 includes a main control section 101, an input I/F (InterFace) 106, a touch panel I/F 107, and an output port 108.
The main control section 101 includes a microprocessor containing the CPU 102, a ROM 103 storing control programs and the like, a flash memory 104 storing the contents of an electronic book and the like, and a work RAM 105 forming various work areas. When the page feed button 10 or the page return button 11 is depressed, the main control section 101 executes a contents display process (described later) of causing the electrophoretic displaymember 2 and the liquid crystal display member 3 to display the contents of the next or preceding page. In addition, the main control section 101 executes a contents high-speed switching display process (described later) of causing only the liquid crystal display member 3 to sequentially display the contents of the next page when the continuous feed button 13 is operated.

Further, the input I/F 106 connects to the page feedbutton 10, page return button 11, menu call button 12, and continuous feed button 13. When the page feed button 10, page return button 11, menu call button 12, or continuous feed button 13 is depressed, the input I/F 106 outputs a page feed button dispersion signal, page return button depression signal, a menu call button depression signal, or a continuous feedbutton depression signal, respectively, to the main control section 101.

Furthermore, the touch panel 14 is connected to the touch panel I/F 107. When menu items are displayed in the display screen 1 and an operation is performed to select one of the menu items displayed, the touch panel 14 outputs a menu item selection signal corresponding to the item selected to the main control section 101.
Moreover, the output port 108 connects to a first video RAM 109 that stores image data corresponding to an image displayed in the electrophoretic display member 2, the first display driver 110 that drives the pixel electrode of the electrophoretic display member 2, a second video RAM 111 that stores an image displayed in the liquid crystal display member 3, and the second display driver 112 that drives the pixel electrode of the liquid crystal display member 3.

### <Operation of Electronic Book Reader>

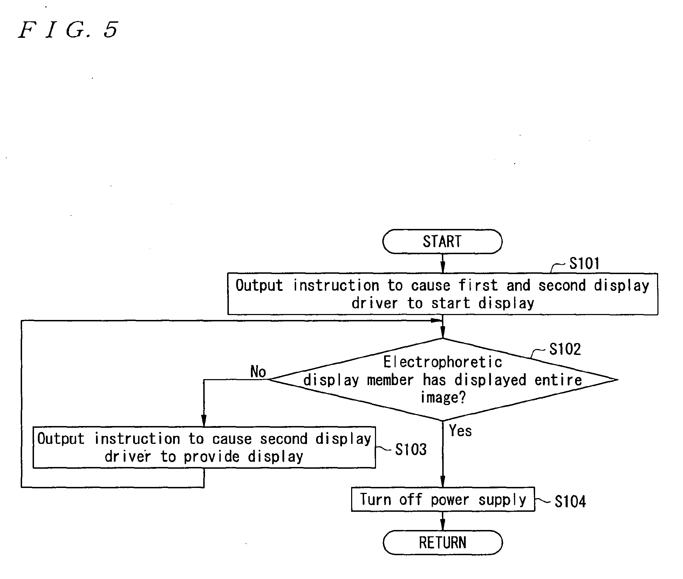

Now, with reference to the flow chart in FIG. 5, description will be given of a contents display process of causing the liquid crystal display member 3 or electrophoretic display member 2 to display the contents of an electronic book on the basis of a detection signal acquired from the page feed button 10, page return button 11, or the like. The contents display process is executed when the input I/F 106 outputs a page feed button depression signal or a page return button depression signal. First, in a step S101, the electrophoretic displaymember 2 and liquid crystal display member 3 are caused to start displaying an image of the contents of the next or preceding page. Specifically, it is determined whether a page feed button depression signal or a page return button depression signal has been outputted. If a page feed button depression signal has been outputted, the image data on the contents of the page next to the page being displayed is read from the flash ROM 104. The image data read is stored in the first video RAM 109 and second video RAM 111 . Then, a display start instruction to cause the electrophoretic display member 2 and liquid crystal display member 3 to start image display is outputted simultaneously to the first display driver 110 and second display driver 112; this instruction causes the images corresponding to the image data stored in the first video RAM 109 and second video RMA 111 to be displayed at the same position in the electrophoretic display member 2 and in the liquid crystal display member 3 as viewed from front of the device.

On the other hand, if a page return button depression signal has been outputted, the image data on the contents of the page preceding the page being displayed is read from the flash ROM 104. The image data read is stored in the first video RAM 109 and second video RAM 111 . Then, an instruction to cause the electrophoretic display member 2 and liquid crystal display member 3 to start image display is outputted simultaneously to the first display driver 110 and second display driver 112; this instruction causes the images corresponding to the image data stored in the first video RAM 109 and second video RMA 111 to be displayed at the same position in the electrophoretic display member 2 and in the liquid crystal display member 3 as viewed from front of the device.

The process then shifts to a step S102 to determine whether or not the entire image indicated in the step S101 has been displayed in the electrophoretic display member 2. Then, if the entire image has been displayed (Yes), the process shifts to a step S104. Otherwise (No) the process shifts to a step S103.
In the step S103, an instruction is outputted to the second display driver 112 to cause the liquid crystal display member 3 to display the image corresponding to the image data stored in the second video RAM 111.

In the step S104, a power source of the electronic book reader is turned off (a power supply to the liquid crystal display member 3 and electrophoretic display member 2 is interrupted) to open the driving circuit of the liquid crystal displaymember 3 and the driving circuit of the electrophoretic display member 2. This arithmetic process is thus finished.
Even if information is inputted from the touch panel 14, processing can be executed using a procedure similar to that described above. Specifically, if information is inputted from the touch panel 14, image data corresponding to the information inputted is generated and stored in the first video RAM 109 and second video RAM 111. Then, an instruction to cause the electrophoretic display member 2 and liquid crystal display member 3 to start image display is outputted simultaneously to the first display driver 110 and second display driver 112; this instruction causes the images corresponding to the image data stored in the first video RAM 109 and second video RMA111 to be displayed at the same position in the electrophoretic display member 2 and in the liquid crystal display member 3 as viewed from front of the device. This enables the information inputted from the touch panel 14 to be displayed in the display screen 1 without keeping the user waiting for a long time.

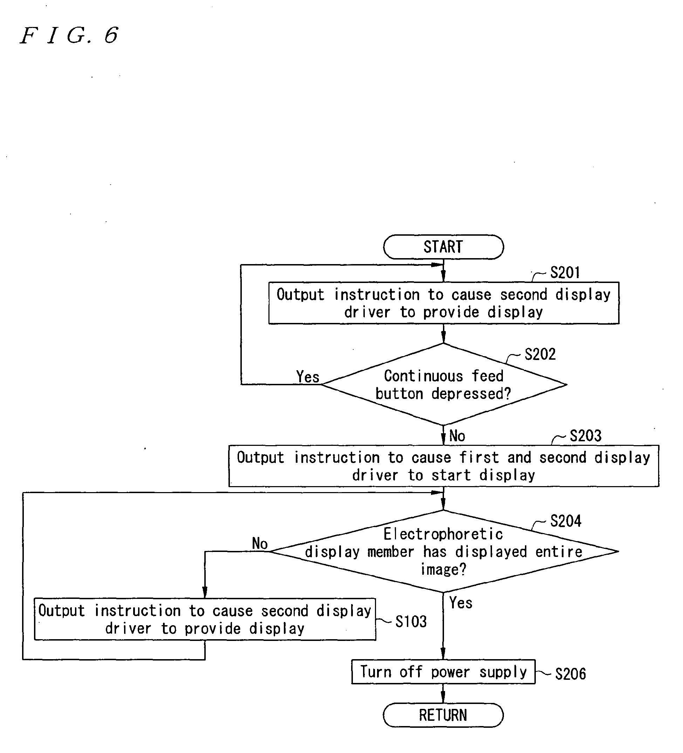

Now, with reference to the flow chart in FIG. 6, description will be given of a contents high-speed switching display process of causing only the liquid crystal display member 3 to sequentially display the contents of an electronic book on the basis of a detection signal acquired from the continuous feedbutton 13 or the like. The contents high-speed switching display process is executed when the input I/F 106 outputs a continuous feed button depression signal. First, in a step S201, the image data on the contents of the page next to the page being displayed is read from the flash ROM 104. The image data read is stored in the second video RAM 111 . Then, an instruction is outputted to the second display driver 112 to cause the liquid crystal display member 3 to display the image corresponding to the image data stored in the second video RAM 111.

The process then shifts to a step S202 to determine whether or not a continuous feed button depression signal has been outputted. Then, if a continuous feed button depression signal has been outputted (Yes), the process shifts to a step S203. Otherwise, that is, if no continuous feed button depression signal has been outputted (No), the process shifts to the step S201.
In the step S203, the image data on the contents of the page displayed when the continuous feed button depression signal was interrupted is read from the flash ROM 104. The image data read is stored in the first video RAM 109 and second video RAM 111. Then, an instruction to cause the electrophoretic display member 2 and liquid crystal display member 3 to start image display is outputted simultaneously to the first display driver 110 and second display driver 112; this instruction causes the images corresponding to the image data stored in the first video RAM 109 and second video RAM 111 to be displayed at the same position in the electrophoretic display member 2 and in the liquid crystal display member 3 as viewed from front of the device.

The process then shifts to a step S204 to determine whether or not the entire image indicated in the step S203 has been displayed in the electrophoretic display member 2. Then, if the entire image has been displayed (Yes), the process shifts to a step S206. Otherwise (No) the process shifts to a step S205.
In the step S205, an instruction is outputted to the second display driver 112 to cause the liquid crystal display member 3 to display the image corresponding to the image data stored in the second video RAM 111.

In the step S206, the power source of the electronic book reader is turned off (the power supply to the liquid crystal display member 3 and electrophoretic display member 2 is interrupted) to open the driving circuit of the liquid crystal displaymember 3 and the driving circuit of the electrophoretic display member 2. This arithmetic process is thus finished.

### <Specific Operation of Electronic Book Reader>

Now, the operation of the electronicbook reader according to the present embodiment will be described on the basis of a specific situation.

First, to display the contents of the next page in the display screen 1, the user depresses the page feed button 10. The input I/F 106 then outputs a page feed button depression signal to the CPU 102. Then, the CPU 102 executes a contents display process. As shown in FIG. 5, first, in the step S101, the image data on the contents of the next page is read and stored in the first and second video RAMs 109 and 111. An instruction is outputted to the first and second display drivers 110 and 112 to cause the electrophoretic displaymember 2 and liquid crystal display member 3 to start displaying the images corresponding to the image data stored in the first and second video RAMs 109 and 111.

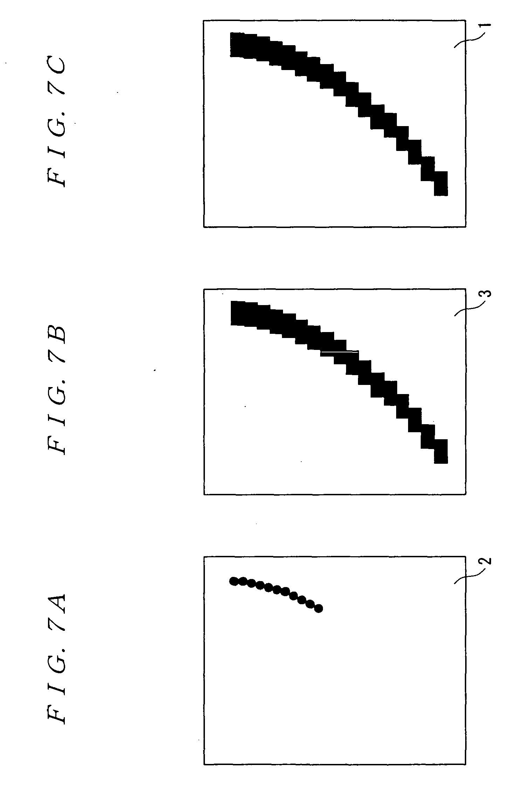

Once the display start instruction is acquired, the first display driver 110 causes the electrophoretic display member 2 to start displaying the image (for example, an image of the katakana character "no") corresponding to the image data stored in the first video RAM 109 as shown in FIG. 7A. Further, the second display driver 112 causes the liquid crystal display member 3 to start displaying the image corresponding to the image data stored in the second video RAM 111 as shown in FIG. 7B. The entire image is thus displayed in the liquid crystal displaymember 3 before being displayed in the electrophoretic display member 2.

Once the entire image is displayed in the liquid crystal display member 3, the image displayed in the liquid crystal display member 3 blocks the image displayed in the electrophoretic display member 2. Accordingly, the display screen 1 displays only the image displayed in the liquid crystal display member 3 as shown in FIG. 7C.
In this manner, in the electronic book reader according to the present embodiment, the entire predetermined image is displayed in the liquid crystal display member 3 before being displayed in the electrophoretic display member 2. This allows the user to view the entire predetermined image displayed from front of the device. This makes it possible to reduce the time before the entire predetermined image is viewed, compared to the method of displaying the predetermined image using only the electrophoretic display member 2. As a result, it is possible to prevent the user from feeling that he or she must wait for a long time before the entire predetermined image is displayed.

Here, it is assumed that the entire image has not been displayed in the electrophoretic display member 2 yet. Then, the result of the determination in the step S102 is "No". In the step S103, an instruction is outputted to the seconddisplay driver 112 to cause the liquid crystal display member 3 to display the image corresponding to the image data stored in the second video RAM 111. Then, when this display start instruction is acquired, the second display driver 112 causes the liquid crystal display member 3 to display the image corresponding to the image data stored in the second video RAM 111 as shown in FIG. 7B. The above flow is then repeated starting with the determination in the step S102.

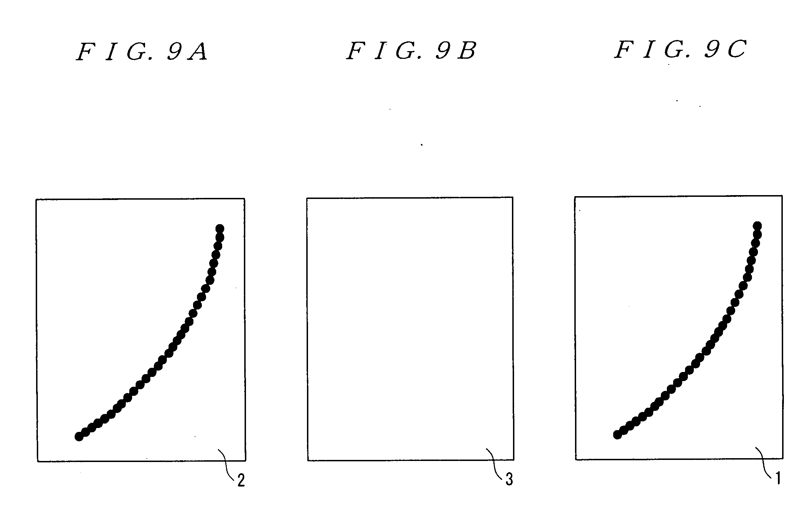

It is assumed that while the above flow is being repeated, the entire image is displayed in the electrophoretic display member 2 as shown in FIG. 3A. Then, the result of the determination in the step S102 is "Yes". In the step S104, the power source of the electronic book reader is turned off to finish this arithmetic process. This opens the driving circuit of the liquid crystal display member 3 and the driving circuit of the electrophoretic display member 2. Then, the image is retained in the electrophoretic display member 2 as shown in FIG. 9A. The image is deleted from the liquid crystal display member 3 as shown in FIG. 9B. The display screen 1 displays the image displayed in the electrophoretic display member 2 as shown in FIG. 9C.

In this manner, with the electronic book reader according to the present embodiment, after the liquid crystal display member 3 displays the entire predetermined image, the power supply to the electrophoretic display member 2 and liquid crystal display member 3 is interrupted so as to retain the display contents of the electrophoretic display member 2. Then, the display contents of the liquid crystal display member 3 are deleted. The retained contents are thus visible to the user from front of the device. Thus, for example, in an application in which a predetermined image is displayed for a long time, the power consumption of the electrophoretic display member 2 and liquid crystal display member 3 can be reduced.

On the other hand, to sequentially display the contents of the next page in the display screen 1, the user depresses the continuous feed button 10. The input I/F 106 then outputs a continuous feed button depression signal to the CPU 102. Then, the CPU 102 executes a contents high-speed switching display process. As shown in FIG. 6, first, in the step S201, the image data on the contents of the next page is read from the flash ROM 104 and stored in the second video RAM 111. An instruction is outputted to the second display driver 112 to cause the liquid crystal display member 3 to display the image corresponding to the image data stored in the second video RAM 111. Then, the result of the determination in the step S202 is "Yes", and the above flow is repeated.

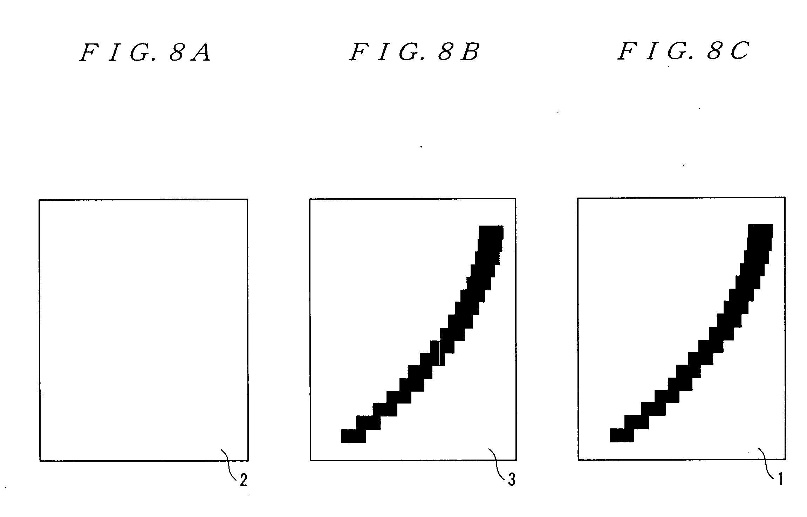

Once the display start instruction is acquired, with the display of images by the electrophoretic display member 2 restricted as shown in FIG. 8A, the second display driver 112 causes the liquid crystal display member 3 to sequentially display the images corresponding to the image data stored in the second video RAM 111 as shown in FIG. 8B. The display screen 1 sequentially displays the images displayed in the liquid crystal display member 3 as shown in FIG. 8C.

In this manner, according to the electronic book reader of the present embodiment, when the user depresses the continuous feed button 13, the display of images by the electrophoretic display member 2 is limited. Thus, compared to the method with which after the entire image has been displayed in the electrophoretic display member 2, the display of the next image is started, a plurality of images can be sequentially displayed at high speed.
Then, the user releases the continuous feed button 13. Then, the result of the determination in the step S201 is "No". In the step S203, the image data displayed when the continuous feedbutton depression signal is interrupted is read and stored in the first and second video RAMS 109 and 111. An instruction is outputted to the first and second display drivers 110 and 112 to cause the electrophoretic display member 2 and liquid crystal display member 3 to start displaying the images corresponding to the image data stored in the first and second video RAMs 109 and 111. Then, the display start instruction outputted causes the entire image to be displayed in the electrophoretic display member 2. Moreover, the result of the determination in the step S204 is "Yes". In the step S206, the driving circuit of the liquid crystal display member 3 and the driving circuit of the electrophoretic display member 2 are opened. This open state causes the display screen 1 to display the image displayed in the electrophoretic display member 2. This arithmetic process is thus finished.

According to the above embodiment, the electrophoretic display member 2 in FIG. 2 constitutes a first display section and a storing display member. Similarly, the liquid crystal displaymember 3 in FIG. 2 constitutes a second display section and a non-storing display member. The control device 100 in FIG. 4 and the steps S101 to S104 in FIG. 5 constitute a display instructing section. The continuous feed button 13 constitutes high-speed switching display request detecting section.
Further, the present invention is not limited to the contents of the above embodiment but may be appropriately varied without departing from the spirit of the present invention.

For example, in the above embodiment, the display start instruction is outputted simultaneously to the electrophoretic display member 2 and liquid crystal display member 3. However, the present invention is not limited to this. For example, the timing for outputting the display start instruction to the liquid crystal display member 3 may be slightly shifted.
Further, in the example shown, the liquid crystal display member 3 is made transparent after the entire image has been displayed in the electrophoretic display member 2. However, the present invention is not limited to this aspect. For example, the liquid crystal display member 3 is made transparent immediately before the entire image is displayed in the electrophoretic display member 2.

Moreover, in the example shown, the electrophoretic display member 2 is placed in the rear of the device, whereas the liquid crystal display member 3 is placed in the front of the device. However, the present invention is not limited to this aspect. For example, another storing display member (for example, a cholesteric liquid crystal) that holds the current state even though the power source is turned off may be placed in the rear of the device. Alternatively, the display in the liquid crystal display member 3 may be made visible from front of the device by placing the cholesteric liquid crystal in the front of the device, placing the liquid crystal display member 3 in the rear of the device, and making a common electrode and a pixel electrode for the cholesteric liquid crystal transparent. Then, after an image has been displayed in the cholesteric liquid crystal, the control device 100 may bring the liquid crystal display member 3 into a non-display state so that only the image displayed in the cholesteric liquid crystal is visible from front of the device.

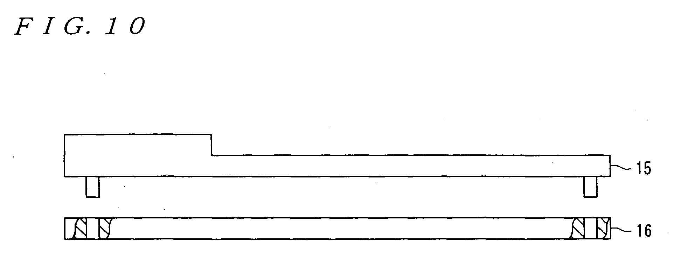

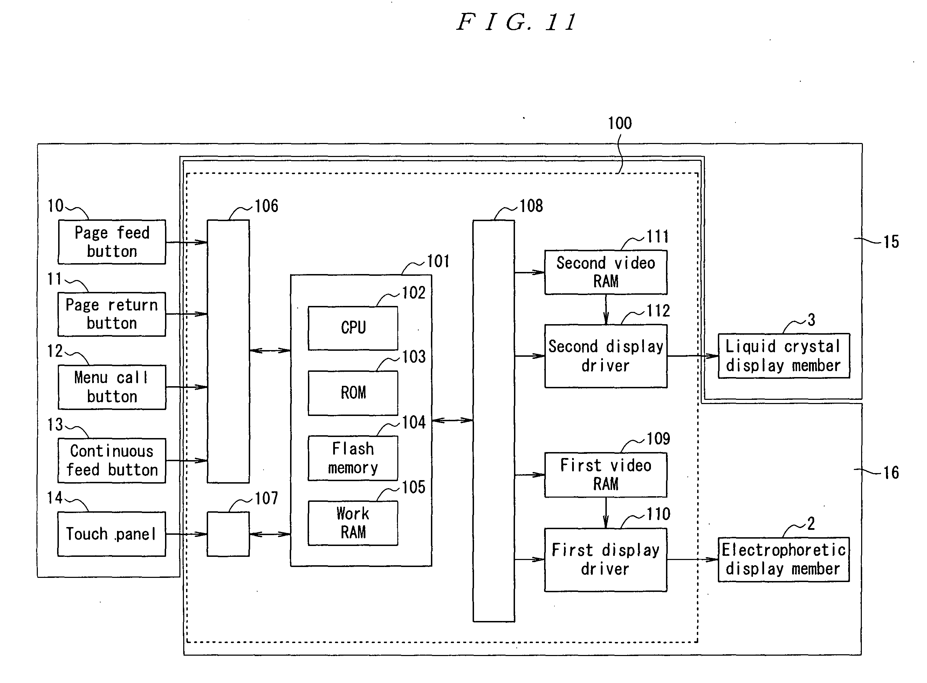

Further, in the example shown, the electrophoretic display member 2 is caused to start displaying an image immediately after the user has released the continuous feed button 13. However, the present invention is not limited to this aspect. For example, the image display may be started a specified time after the continuous feed button 13 has been released.
Moreover, in the example shown, the electrophoretic display member 2, the liquid crystal display member 3, and the touch panel 14 are integrated together. However, the present invention is not limited to this aspect. For example, the electrophoretic display member 2 may be configured to be separable. Specifically, as shown in FIGS. 10 and 11, projecting connection terminals are provided in the four corners of a bottom surface of an upper frame portion 15 including the touchpanel and the liquid crystal displaymember 3 and the recess terminals are provided in the four corners of a top surface of a lower frame portion 16 including the electrophoretic display member 2, and corresponding ones of these connection terminals may be fitted together so as to transmit data between the connection terminals fitted together. Then, the electrophoretic display member 2 and the liquid crystal display member 3 may be aligned with each other to constitute the display screen of the electronic book reader. In other words, such fitting with the connection terminals enables information from the touchpanel 14 and page feed button 10 to be transmitted to the main control section 101 and also enables information from the drivers to be transmitted to the liquid crystal display member 3. When a desired one of a plurality of images is searched for, this image can be quickly searched for by connecting the electrophoretic display member 2 and the liquid crystal display member 3 together and causing these display members 2 and 3 to sequentially display images for a quick search. Further, to view the image searched for, it is possible to separate the electrophoretic display member 2, which retains that image, and directly view the image retained in the electrophoretic display member 2 separated. It is thus possible to prevent the visibility of the electrophoretic display member 2 from being degraded when the user views the electrophoretic display member 2 through the liquid crystal display member 3.

Further, in the example shown, images are always displayed both in the electrophoretic display member 2 and in the liquid crystal display member 3. However, the present invention is not limited to this aspect. For example, when the size of a character contained in the display contents is detected and is large enough to appropriately display the character in the liquid crystal display member 3 having a low pixel density, the display of the image by the electrophoretic display member 2 may be limited, while only the liquid crystal display member 3 may display the image. This allows the image to be also displayed in the electrophoretic display member 2 when the character is distorted if it is displayed only in the liquid crystal display member 3. Further, when the character can be read even though it is displayed only in the liquid crystal display member 3, the display of the image by the electrophoretic display member 2 is limited. This makes it possible to reduce the power consumption of the electrophoretic display member 2. Thus, the power consumption of the electronic book reader can be reduced without impairing display quality.

## Claims

**1.** An image display device comprising a first display section that can display a predetermined image, a second display section placed in front of the first display section and which can display the predetermined image at a higher speed than the first display section, and a display instructing section that causes the predetermined image to be displayed at the same position in the first display section and in the second display section as viewed from front of the device, and wherein the display instructing section makes the second display section transparent after the predetermined image has been displayed in the first display section.

**2.** An image display device comprising a first display section that can display a predetermined image, a second display section placed behind the first display section and which can display the predetermined image at a higher speed than the first display section, and a display instructing section that causes the predetermined image to be displayed at the same position in the first display section and in the second display section as viewed from front of the device, and wherein the first display section is configured so that the display of the second display section is visible through the first display section from front of the device, and the display instructing section brings the second display section into a non-displayed state after the predetermined image has been displayed in the first display section.

**3.** The image display device according to claim 1 or 2, comprising a touch panel placed in the front of a display screen including the first display section and the second display section to allow a user to select an image displayed in at least one of the first and second display sections or to allow the user to input information.

**4.** The image display device according to any of claims 1 to 3, wherein the number of pixels per unit area of the second display section is smaller than the number of pixels per unit area of the first display section.

**5.** The image display device according to claim 4, comprising detailed display unnecessary state detecting section for detecting that a detailed image display is not required and wherein when detailed display unnecessary state detecting section detects that no detailed image display is required, the predetermined image is displayed only in the second display section.

**6.** The image display device according to any of claims 1 to 5, wherein the first display section is a storing display member that can hold display contents while a power supply remains interrupted and the second display section is a non-storing display member from which the display contents are deleted when the power supply is interrupted.

**7.** The image display device according to claim 3, wherein the first display section is separable from the second display section and from the touch panel.

**8.** The image display device according to any of claims 1 to 7, comprising high-speed switching display request detecting section for detecting a request for high-speed switching display of a plurality of images and wherein when the high-speed switching display request detecting section detects a request for high-speed switching display of a plurality of images, the plurality of images are sequentially displayed only in the second display section.
